# EUROPEAN PATENT APPLICATION

(11) **EP 4 026 744 A1**
(43) Date of publication of application: **13.07.2022**
(21) Application number: 20861427.1
(22) Date of filing: 11.08.2020
(51) Int. Cl.: B60W 30/08, B60W 40/114, B60W 50/08, B62D 6/00, G08G 1/16

(54) **TRAVEL PATH ESTIMATING DEVICE**

(30) Priority: 03.09.2019 JP 2019160612
(71) Applicant: Hitachi Astemo, Ltd., Ibaraki 312-8503 (JP)
(72) Inventor: YUKI, Fumio, Hitachinaka-shi, Ibaraki 312-8503 (JP); KURODA, Hiroshi, Hitachinaka-shi, Ibaraki 312-8503 (JP); NAGATSUKA Keiichiro, Hitachinaka-shi, Ibaraki 312-8503 (JP); ASAKURA Takamasa, Hitachinaka-shi, Ibaraki 312-8503 (JP); SHIMADA Kenichi, Hitachinaka-shi, Ibaraki 312-8503 (JP)
(74) Representative: Mewburn Ellis LLP
(86) International application number: PCT/JP2020/030552
(87) International publication number: WO 2021/044811

(57) **Abstract**

Provided is a travel path estimating device capable of accurately estimating a travel path of a host vehicle when the host vehicle turns right and left (also referred to as during turning). The travel path estimating device includes a prediction processing unit 116 or 216 including a prediction unit 111 or 211 that predicts a future steering angle amount based on a steering angle change rate. The travel path estimating device also includes an adjustment processing unit 210 including an adjustment unit 202 that adjusts a steering angle of steering to increase a change in estimated travel path coordinates with respect to time as compared to that before the adjustment. The travel path estimating device includes a model switching unit 217 that performs switching between an adjustment processing operation performed by the adjustment processing unit 210 and a prediction processing operation performed by the prediction processing unit 216. The adjustment processing operation performed by the adjustment processing unit 210 including the adjustment unit 202 is used in the first half of estimation, and the prediction processing operation performed by the prediction processing unit 216 including the prediction unit 211 is used in the second half of the estimation.

## Description

### Technical Field

The present invention relates to a travel path estimating device, and more particularly to a travel path estimating device that estimates a travel path of a host vehicle in order to reduce a pedestrian accident at an intersection.

### Background Art

In recent years, electromotive and autonomous driving of automobiles have been developed. Each company has developed autonomous driving to achieve both of improvement of an autonomous driving level and expansion of application scenes to realize fully autonomous driving. For example, a vehicle to which a parking assistance system or a lane deviation prevention system is applied is put on the market, which indicates that the autonomous driving level has been improved. In addition, development of products including sensors required for an advanced driver assistance system (ADAS) and autonomous driving technology is in progress in order to realize a safe and better vehicular society. For example, an intersection warning system using a millimeter wave radar (MRR) for reducing a pedestrian accident caused by a truck at an intersection is an example thereof. This system is a system that notifies of a possibility of a collision with a pedestrian by an alarm and urges a driver to perform a brake operation to avoid the collision. In order to implement the intersection warning system, an algorithm for (a) detecting a pedestrian by using the MRR, (b) estimating a travel path such as a right or left turn at the intersection, and (c) predicting a collision based on an estimated position of the host vehicle and a position of the detected pedestrian and outputting a warning is required. In particular, it is important to improve accuracy in estimating the travel path such as a right or left turn at the intersection. In a vehicle on which this system is mounted, for example, in an alarm algorithm provided in an electronic control unit (ECU), information regarding a pedestrian is acquired by a monitoring camera or a front-side radar (the MRR or the like), movement of the pedestrian is predicted, and a future travel path of the host vehicle is predicted based on information acquired from a vehicle speed sensor and a steering sensor to prevent a collision with the pedestrian.

As model calculation of calculating such a travel path trajectory of a vehicle, a uniform circular motion model, a two-wheel model, and an Ackermann model are known. In addition, PTL 1 discloses a conventional technology for estimating a travel path of a host vehicle such as a right or left turn at an intersection.

In PTL 1, a right-turn course is estimated based on a road shape of map data, but when data regarding the road shape cannot be obtained, the course is estimated assuming a turning trajectory with a certain radius.

### Citation List

### Patent Literature

PTL 1: JP 2010-188981 A

### Summary of Invention

### Technical Problem

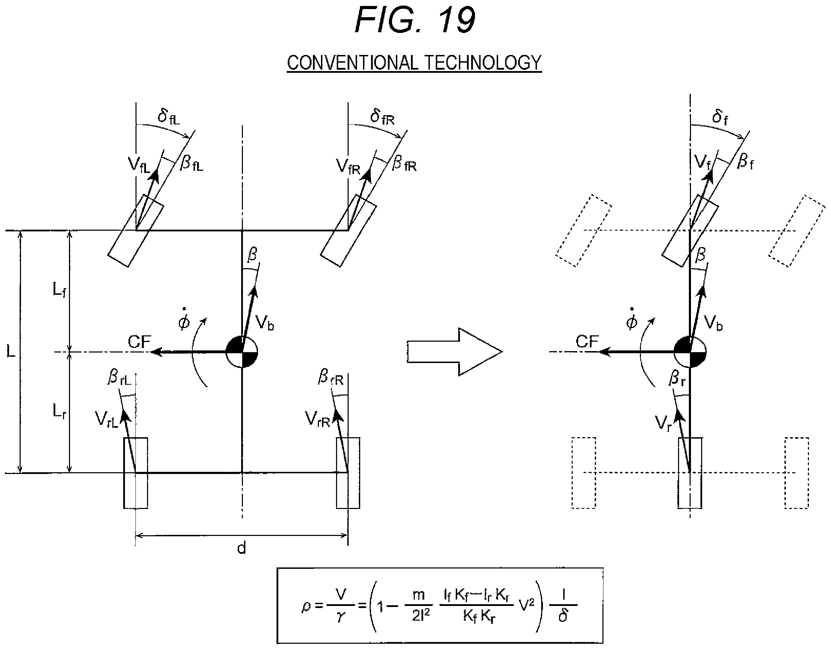

The present inventors have examined whether or not it is possible to estimate a travel path by the model calculation as described above based on estimation accuracy. FIG. 19 illustrates the two-wheel model generally used as a vehicle motion model as an example. The two-wheel model is a model in which left and right tires are brought to the center in a four-wheel model. In this two-wheel model, a vehicle speed (VS) and a yaw rate (YR) are input as vehicle information, and a vehicle turning radius (= curvature radius) used for calculation of predicted travel path coordinates is obtained by a formula: ρ (curvature radius) = V (vehicle speed)/γ (yaw rate).

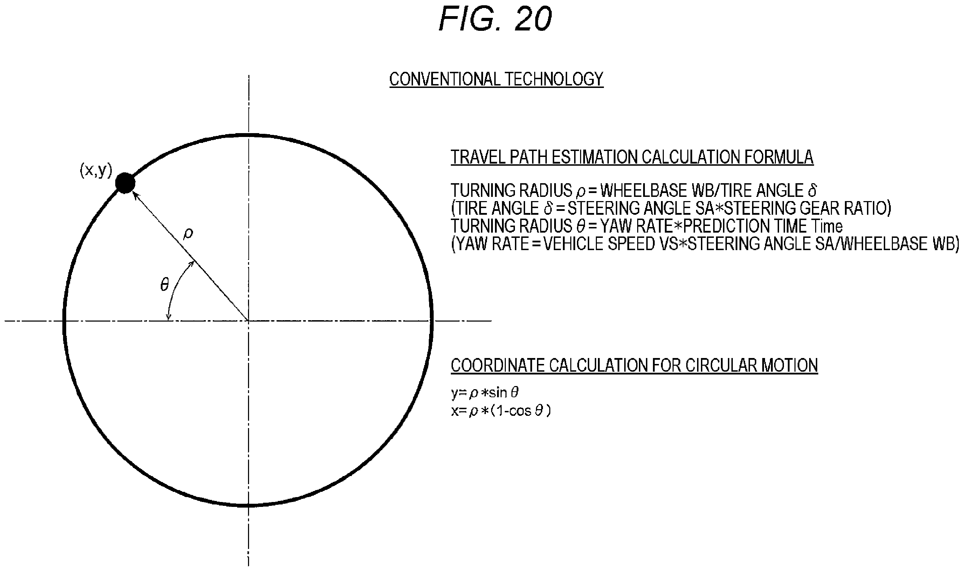

Further, FIG. 20 illustrates a calculation formula of the Ackermann model and calculation of coordinates of a circular motion. The Ackermann model is a model that is established in a situation where it can be considered that no centrifugal force acts, such as an extremely low speed (5 km/h or less). In this Ackermann model, a vehicle speed (VS) and a steering angle (SA) are input as vehicle information, and a curvature radius (= turning radius) used for calculation of predicted travel path coordinates is obtained by a formula: ρ (curvature radius) = WB (wheelbase)/δ (tire angle = steering angle * steering gear ratio).

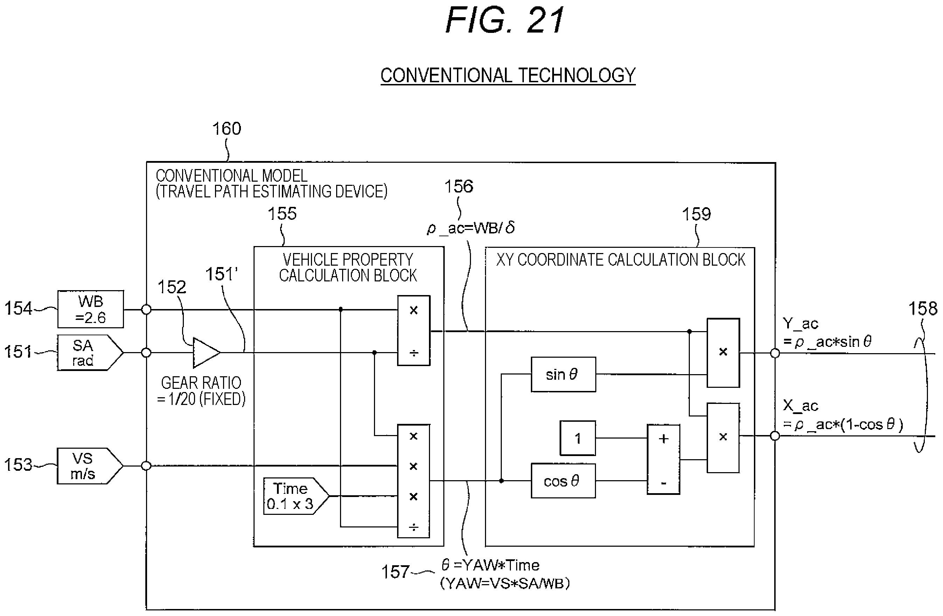

FIG. 21 is a diagram illustrating a conventional vehicle model expression by a calculation block. A conventional model 160 is a calculation model including a vehicle property calculation block 155 that calculates a vehicle property based on information regarding a tire angle 151' converted from a steering angle (amount) 151 of steering by a steering gear ratio (hereinafter, the steering gear ratio may be simply referred to as a gear ratio) 152, a vehicle speed 153, and a wheelbase 154, and an XY coordinate calculation block 159 that converts a turning radius ρ_ac156 and a turning angle θ157 which are outputs of the vehicle property calculation block 155 into XY coordinates 158 (of a travel path of a host vehicle). As the curvature radius used for calculation of the predicted travel path coordinates is obtained by the above formula, the curvature radius is determined not by the steering angle (SA) of the steering but by the tire angle (δ). Therefore, in the calculation formula, the steering angle and the gear ratio are integrated. The gear ratio is a fixed value for one vehicle type, and the gear ratio of the vehicle used in this experiment is a fixed value of 1/20.

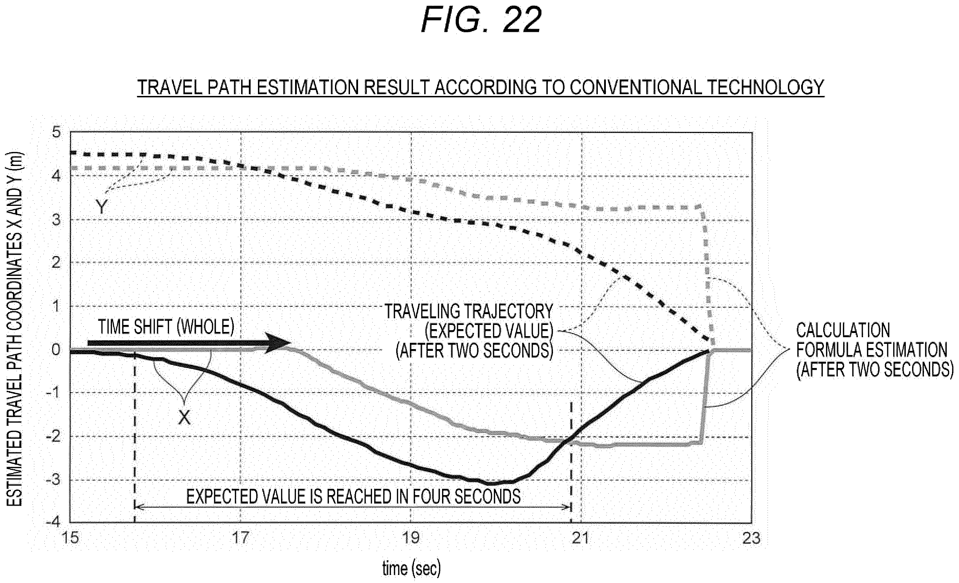

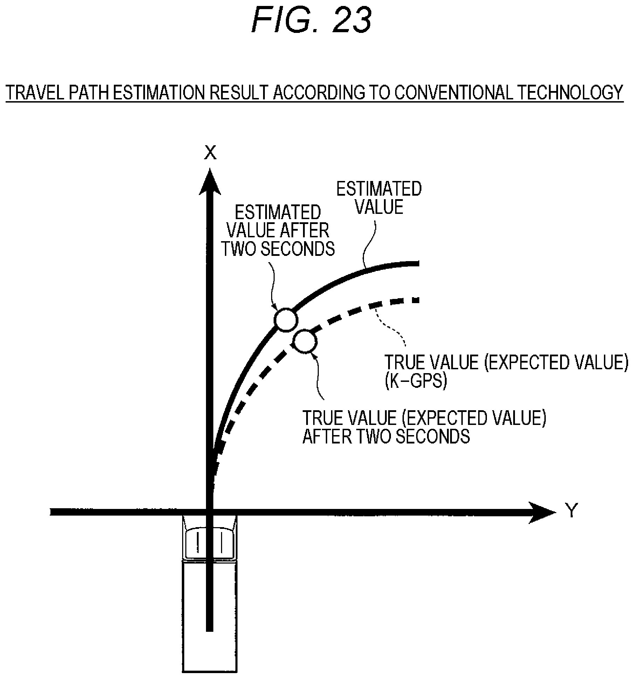

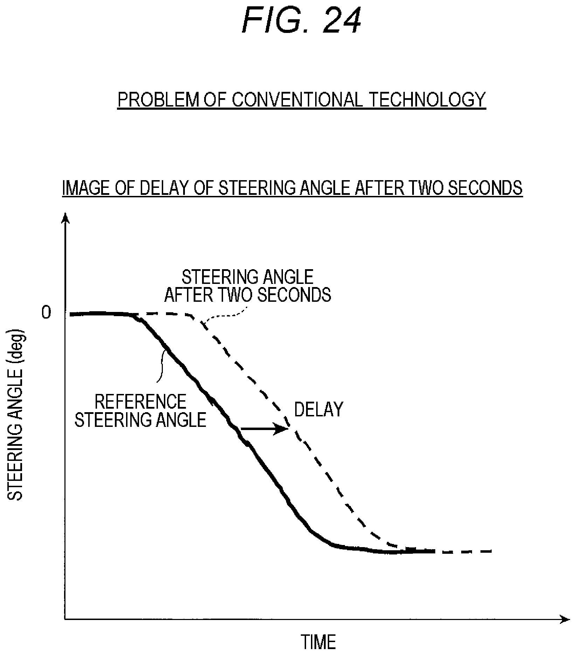

FIG. 22 illustrates, as an example, a result of travel path estimation using the Ackermann model. The horizontal axis represents an elapsed time during traveling of the host vehicle at an intersection, and the vertical axis represents estimated travel path coordinates X and Y after two seconds at each point. As illustrated in FIG. 23, the estimated travel path coordinates indicate coordinates obtained by separating an estimated value after two seconds in an X direction and a Y direction. In order to predict a possibility of a collision with a pedestrian based on the result of estimating the travel path of the host vehicle, it is necessary to reach an expected value in two to four seconds from the start of a turn during a host vehicle traveling time (the horizontal axis in FIG. 22) with an accuracy of ±1 m. On the other hand, in the result of estimating the host vehicle travel path, although the Y coordinate is relatively close to an actual travel trajectory (expected value), the overall result is a result delayed by about two seconds in a time axis direction, and it takes about four seconds to reach the expected value, and it can be seen that an error due to a delay at the start of the operation is large. This is because, as illustrated in FIG. 24, calculation for estimating the travel path after several seconds (for example, two seconds) is performed using a reference steering angle (an estimation time of 0 seconds), and thus, the estimated travel path coordinates are also delayed in the time axis direction.

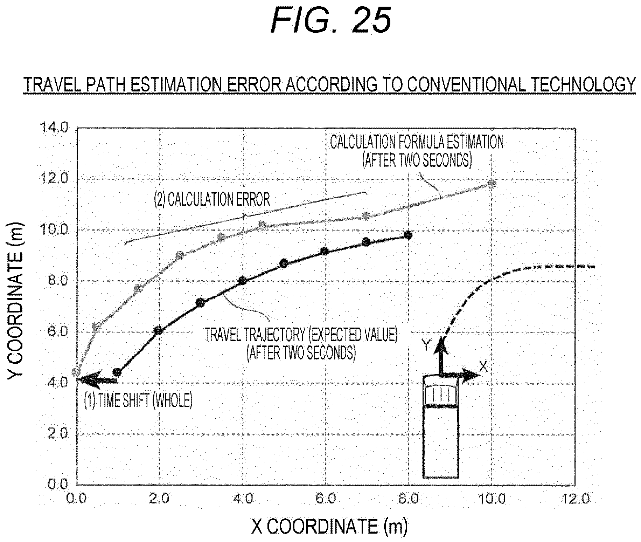

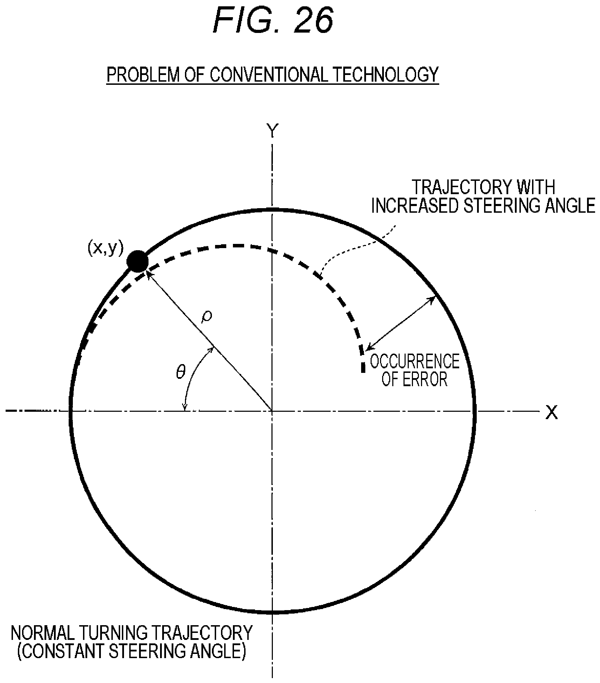

In FIG. 25, the calculation error of the Ackermann model with respect to the actual travel trajectory is plotted. As a result, in addition to the time delay in FIG. 24, it can be seen that the calculation error in the second half of the operation is about 2 m, which is large. The reason is that, as illustrated in FIG. 26, in the travel path estimation, the estimated travel path coordinates are calculated assuming a uniform circular motion with a constant steering angle at the estimation time of "0" seconds, however, the original vehicle passes through the intersection while increasing or returning the steering angle after entering the intersection, and thus, an error between the estimated travel path coordinates and the actual coordinates occurs.

As described above, the problem of the conventional travel path estimation is the time delay at the start of the right/left turning operation and the calculation error in the second half of the operation. Although not illustrated, the uniform circular motion model and the two-wheel model have similar results, and there is a problem that the accuracy necessary for the travel path estimation cannot be realized only by the model calculation.

The above-described travel path estimating device described in PTL 1 estimates a right-turn course based on a road shape of map data. However, in a case where data regarding the road shape cannot be obtained, the course is estimated assuming a turning trajectory with a certain radius, and consideration is not given to a difference in turning radius due to a difference in size of an intersection or wheelbase, and calculation for a steering angle increasing operation when entering the intersection. For this reason, similarly to what has been considered by the present inventors, it is not possible to realize accuracy required for estimating a travel path and, consequently, collision avoidance.

In view of the above circumstances, an object of the present invention is to provide a travel path estimating device capable of accurately estimating a travel path of a host vehicle when the host vehicle turns right or left (also referred to during turning).

### Solution to Problem

An outline of a representative invention among the inventions disclosed in the present application will be briefly described as follows.

That is, one of the ideas of the present invention is a travel path estimating device that estimates a travel path of a host vehicle based on a steering angle amount of steering, the travel path estimating device including a prediction unit that predicts a future steering angle amount based on a steering angle change rate that is a temporal change of the steering angle amount.

### Advantageous Effects of Invention

Briefly describing effects obtained by representative embodiments of the invention disclosed in the present application, it is possible to obtain a travel path estimating device capable of accurately estimating a travel path of a host vehicle.

Problems, configurations, and effects other than those described above will become apparent by the following description of embodiments.

### Brief Description of Drawings

[FIG. 1] FIG. 1 is a system configuration diagram of a vehicle on which an electronic control unit (ECU) including a travel path estimating device according to a first embodiment of the present invention is mounted.
[FIG. 2] FIG. 2 is a block diagram of an alarm system mounted on the vehicle.
[FIG. 3] FIG. 3 is a configuration diagram of the travel path estimating device according to the first embodiment of the present invention.
[FIG. 4] FIG. 4 is an explanatory diagram of a definition of a steering angle change rate used for a prediction unit of a prediction processing unit according to the first embodiment of the present invention.
[FIG. 5] FIG. 5 is an explanatory diagram of a definition of a steering angle coefficient of the prediction unit of the prediction processing unit according to the first embodiment of the present invention.
[FIG. 6] FIG. 6 is a block configuration diagram of the prediction unit of the prediction processing unit according to the first embodiment of the present invention.
[FIG. 7] FIG. 7 is a diagram illustrating a travel path estimation result according to the first embodiment of the present invention.
[FIG. 8] FIG. 8 is a configuration diagram of a travel path estimating device according to a second embodiment of the present invention.
[FIG. 9] FIG. 9 is a switching image diagram of the travel path estimating device according to the second embodiment of the present invention.
[FIG. 10] FIG. 10 is a block configuration diagram of an adjustment processing unit according to the second embodiment of the present invention.
[FIG. 11] FIG. 11 is an explanatory diagram of an effect of adjustment processing of the adjustment processing unit according to the second embodiment of the present invention.
[FIG. 12] FIG. 12 is an explanatory diagram of an effect of adjusting processing for travel path estimation according to the second embodiment of the present invention.
[FIG. 13] FIG. 13 is an explanatory diagram of an effect of reducing an error in travel path estimation according to the second embodiment of the present invention.
[FIG. 14] FIG. 14 is a configuration diagram of a travel path estimating device according to a third embodiment of the present invention.
[FIG. 15] FIG. 15 is a diagram illustrating a travel path estimation result according to the third embodiment of the present invention.
[FIG. 16] FIG. 16 is a diagram illustrating a travel path estimation result according to the second embodiment of the present invention under the same condition as in FIG. 15.
[FIG. 17] FIG. 17 is a configuration diagram of a travel path estimating device according to a fourth embodiment of the present invention.
[FIG. 18] FIG. 18 is a schematic diagram of a table used in the fourth embodiment of the present invention.
[FIG. 19] FIG. 19 is an explanatory diagram of a specific two-wheel model as a general vehicle motion model.
[FIG. 20] FIG. 20 is an explanatory diagram of a calculation formula of an Ackermann model as a general vehicle model and coordinate calculation for a circular motion.
[FIG. 21] FIG. 21 is a calculation block diagram of a general vehicle model expression.
[FIG. 22] FIG. 22 is a diagram illustrating a result of travel path estimation using the Ackermann model as a general vehicle model.
[FIG. 23] FIG. 23 is a diagram illustrating a result of travel path estimation using the Ackermann model as a general vehicle model.
[FIG. 24] FIG. 24 is a diagram illustrating a cause of a delay of a general vehicle model calculation result in a time axis direction.
[FIG. 25] FIG. 25 is a diagram illustrating an error of travel path estimation using the Ackermann model as a general vehicle model.
[FIG. 26] FIG. 26 is a diagram illustrating a cause of a calculation error of a general vehicle model calculation result.

### Description of Embodiments

Hereinafter, embodiments of the present invention will be described in detail with reference to the drawings. Note that, in all the drawings for describing the embodiments, the same portions are denoted by the same reference signs in principle, and a repeated description thereof will be omitted. The present invention is not to be construed as being limited to the description of the following embodiments. Those skilled in the art can easily understand that the specific configuration can be changed without departing from the spirit or gist of the present invention.

Notations such as "first", "second", and "third" in the present specification and the like are attached to identify components, and do not necessarily limit the number or order. In addition, a number for identifying a component is used for each context, and a number used in one context does not necessarily indicate the same configuration in another context. In addition, it does not prevent a component identified by a certain number from also functioning as a component identified by another number.

The position, size, shape, range, and the like of each component illustrated in the drawings and the like do not represent the actual position, size, shape, range, and the like in some cases in order to facilitate understanding of the invention. Therefore, the present invention is not necessarily limited to the position, size, shape, range, and the like disclosed in the drawings and the like.

Components expressed in the singular herein are intended to include the plural unless the context clearly dictates otherwise.

### [First embodiment]

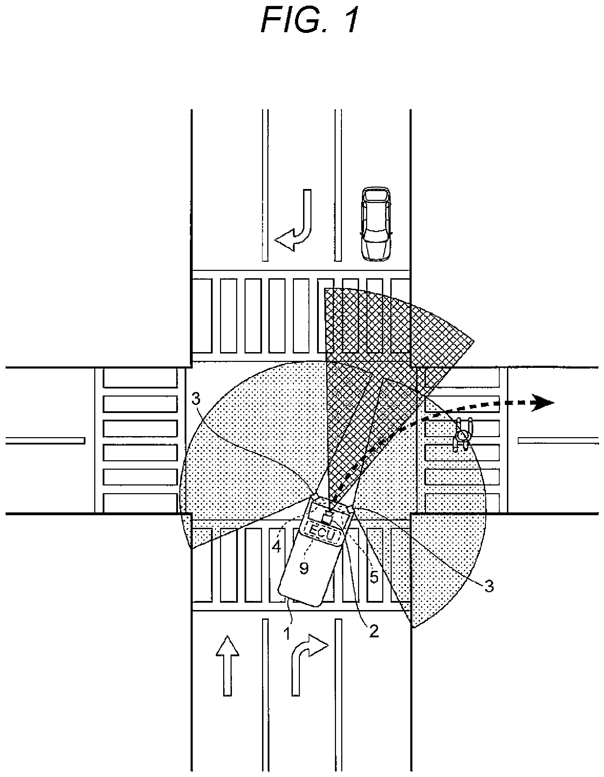

FIG. 1 is a system configuration diagram of a vehicle on which an electronic control unit (ECU) including a travel path estimating device according to a first embodiment of the present invention is mounted.

A vehicle 1 (hereinafter, also referred to as a host vehicle) of the illustrated embodiment mainly includes a front monitoring camera 2, a front-side radar 3, a vehicle speed sensor 4, a steering sensor 5, and an ECU 9 as a control device.

The front monitoring camera 2 is for acquiring information (image) regarding an object (a pedestrian, a bicycle, another vehicle, or the like) in front of the vehicle 1, and includes, for example, an imaging element such as a charge-coupled device (CCD) or a complementary metal-oxide-semiconductor (CMOS), and includes a stereo camera, a monocular camera, or the like installed near a windshield so as to image an area in front of the vehicle 1. The front-side radar 3 is for acquiring information regarding objects in front of and on the side of the vehicle 1, and includes, for example, a millimeter wave radar (MRR), an ultrasonic sensor, a LiDAR, or the like installed on a left side, a right side, or the like of a front portion of the vehicle 1 so as to monitor an area in front of and on the side of the vehicle 1. Note that it is a matter of course that means for acquiring information regarding an object around the vehicle 1 is not limited to the front monitoring camera 2 and the front-side radar 3 in the illustrated example.

The vehicle speed sensor 4 is for acquiring a speed (vehicle speed) of the vehicle 1, and for example, conventionally known means such as a wheel speed sensor can be applied. For example, the vehicle speed may be acquired by differentiating position information obtained by a global positioning system (GPS).

The steering sensor 5 is for acquiring a steering angle (amount) of steering provided in the vehicle 1, and conventionally known means such as an angle sensor mounted on the steering can be applied.

The information regarding an object around the vehicle 1 acquired by the front monitoring camera 2 and the front-side radar 3 described above and the information regarding the vehicle 1 (vehicle speed and steering angle) acquired by the vehicle speed sensor 4 and the steering sensor 5 are transmitted to the ECU 9 via a communication line such as a controller area network (CAN).

In addition, in the vehicle 1 of the present embodiment, for example, an alarm system including an alarm algorithm mounted on the ECU 9 is mounted. This alarm system is implemented by three technologies. The first is to detect a pedestrian. The second is to estimate a travel path of the host vehicle. The third is to detect a possibility of a future collision based on a position of the pedestrian and a predicted travel path position of the host vehicle and to sound an alarm. The alarm system is a system that sounds the alarm a few seconds (for example, two seconds) before a collision to urge a driver to step on the brake to avoid the collision.

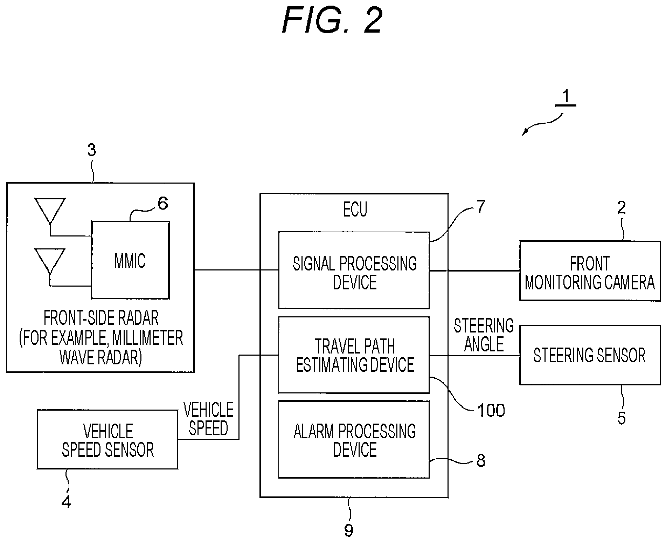

FIG. 2 is a block diagram of the alarm system mounted on the vehicle 1 described above.

The ECU 9 is implemented by a microcomputer including a central processing unit (CPU), a memory, and the like. In this example, the ECU 9 includes a signal processing device 7, a travel path estimating device 100, and an alarm processing device 8 in order to implement the alarm system described above.

The alarm system of the present embodiment includes the front monitoring camera 2 mounted on the vehicle 1, the front-side radar 3 including a monolithic microwave integrated circuit (MMIC) 6 that transmits and receives a signal, the vehicle speed sensor 4, and the steering sensor 5, and the signal processing device 7, the travel path estimating device 100, and the alarm processing device 8 mounted on the ECU (microcomputer) 9.

The signal processing device 7 mounted on the ECU (microcomputer) 9 performs processing of detecting a pedestrian by using the information acquired by the front monitoring camera 2 and the front-side radar 3 as input information. The travel path estimating device 100 performs processing of estimating the travel path of the host vehicle by using the vehicle information (the vehicle speed and the steering angle) acquired by the vehicle speed sensor 4 and the steering sensor 5 as input information (as described later). The alarm processing device 8 performs processing of detecting a possibility of a future collision between the pedestrian and the host vehicle based on information obtained from the signal processing device 7 and the travel path estimating device 100, determining necessity of an alarm, and sounding the alarm in a case where it is determined that the alarm is necessary.

In the present embodiment, as will be described later, the travel path estimating device 100 can perform travel path estimation calculation with high accuracy (for example, accuracy in travel path estimation can be improved to 1 m or less). Therefore, in the alarm system of the present embodiment, the possibility of a future collision can be detected with high accuracy, the alarm can be reliably sounded several seconds (for example, two seconds) before the collision with the pedestrian, and the driver can step on the brake accordingly, which can contribute to prevention of a pedestrian accident at an intersection, for example.

Note that, since conventionally known methods can be applied as processing methods such as the object detection processing in the signal processing device 7 and the alarm necessity determination processing and alarm output processing in the alarm processing device 8 described above, a detailed description thereof will be omitted here.

In addition, in the above-described example, as a system for avoiding a collision, the alarm system that notifies of a possibility of a collision with a pedestrian by an alarm and urges the driver to perform a braking operation is adopted. However, for example, it is needless to say that a system that automatically controls braking and steering of the host vehicle based on a result of detecting a possibility of a future collision between a surrounding object and the host vehicle may be applied.

Hereinafter, among the functions of the ECU 9 described above, the function of the travel path estimating device 100 that predicts and estimates a future travel path of the host vehicle based on the vehicle information acquired by the vehicle speed sensor 4 and the steering sensor 5 will be described in detail.

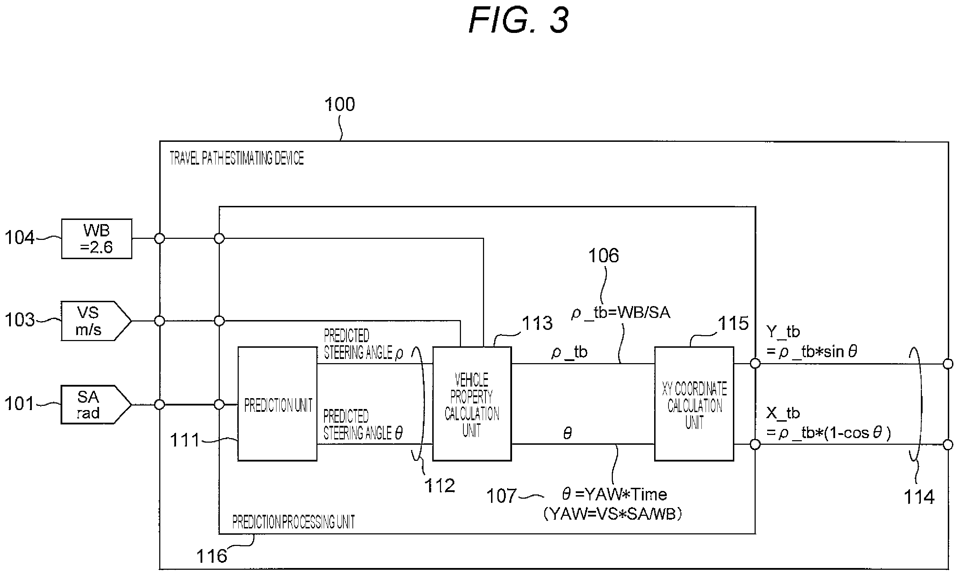

FIG. 3 is a diagram illustrating an example of a configuration of the travel path estimating device 100 according to the first embodiment of the present invention.

As described above, in the conventional method, consideration is not given to a difference in turning radius due to a difference in size of an intersection or wheelbase, and calculation for a steering angle increasing operation when entering the intersection. Therefore, in the present embodiment, a future steering angle amount is predicted (estimated) based on a steering angle change rate (also referred to as a steering angle slope) which is a temporal change of the steering angle amount of the steering, thereby reducing a calculation error particularly in the second half of the operation (the second half of the estimation).

As illustrated in FIG. 3, for example, the travel path estimating device 100 of the first embodiment receives, from the steering sensor 5, a steering angle (SA) 101 of the steering, receives, from the vehicle speed sensor 4, a vehicle speed (VS) 103, and receives information regarding a wheelbase (WB) 104 stored in advance in a storage device such as a memory. The travel path estimating device 100 of the first embodiment includes a prediction processing unit 116 including a prediction unit 111 that predicts a future steering angle amount based on a steering angle change rate obtained from input information of a steering angle 101 of the steering, a vehicle property calculation unit 113 that calculates a vehicle property based on information regarding a predicted steering angle 112, which is an output of the prediction unit 111, a vehicle speed 103, and a wheelbase 104, and an XY coordinate calculation unit 115 that calculates XY coordinates 114 which indicate an estimated position of a future travel path of the host vehicle based on the vehicle property which is an output of the vehicle property calculation unit 113.

Here, the predicted steering angle 112 is information including a predicted steering angle turning radius (ρ) for calculation of a turning radius (= curvature radius) (ρ_tb) 106 and a predicted steering angle turning angle (θ) for calculation of a turning angle (θ) 107, and the vehicle property is information including the turning radius (= curvature radius) (ρ_tb) 106 and the turning angle (θ) 107.

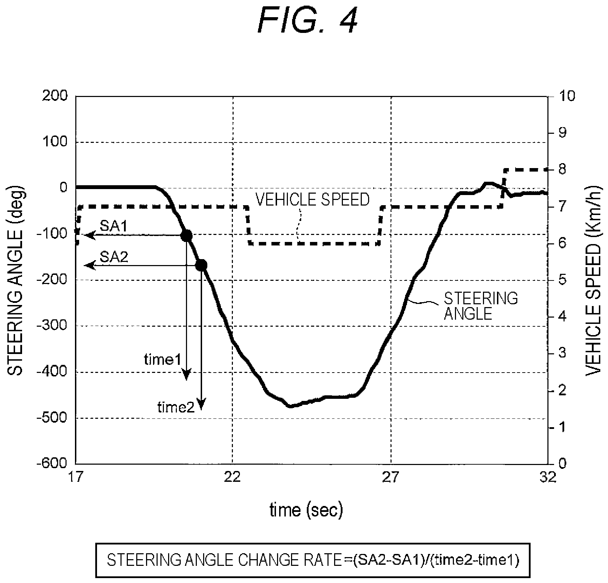

First, a concept of prediction performed by the prediction unit 111 will be described. FIG. 4 illustrates a steering angle change during a right turn at a constant speed at an intersection.

The steering during traveling gradually increases the steering angle from the start of the right turn, starts returning the steering angle before the end of the turn, returns the steering angle to 0, and passes through the intersection. As illustrated in FIG. 22, since the steering angle used for the travel path estimation is time-shifted according to a prediction time, it is necessary to correct the steering angle from a ratio with respect to an expected value in order to improve accuracy in coordinate calculation. In addition, since a correction amount is different between an increasing side and a returning side, as can be seen from FIG. 4, it is necessary to solve a problem that the same steering angle exists between the increasing and the returning. Therefore, it has been considered that the same steering angle of the increasing and the returning is separated using a curve of the temporal change of the steering angle.

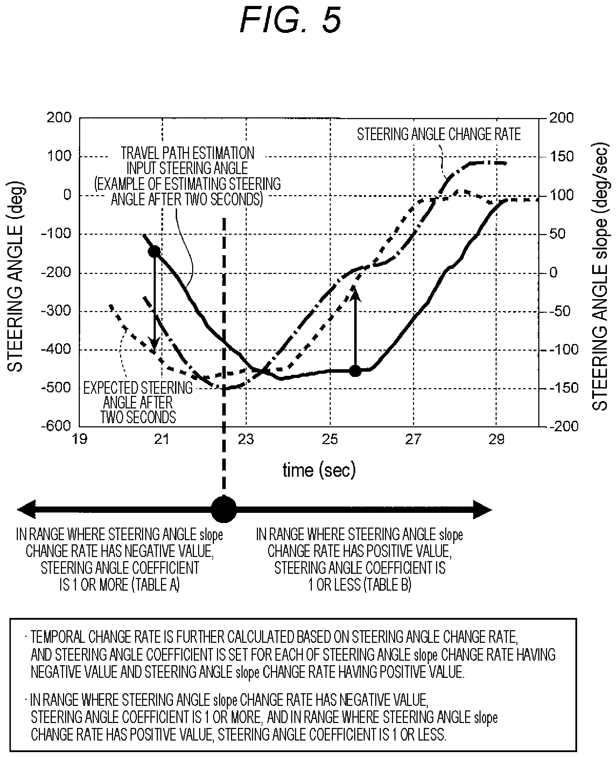

FIG. 5 illustrates a relationship between the steering angle change rate and the steering angle of the steering (the value used for estimation and the expected value).

It can be seen from the relationship illustrated in FIG. 5 that the steering angle coefficient (a ratio of the steering angle used for the estimation calculation with respect to the expected value) is at a boundary between a range where the steering angle coefficient has a value larger than "1" and a range where the steering angle coefficient has a value smaller than "1", near a switching point between a range where the steering angle change rate has a positive value and a range where the steering angle change rate has a negative value. Therefore, a temporal change rate is further obtained from the steering angle change rate, and the increasing side is expressed as a range where the steering angle slope change rate has a negative value, and the returning side is expressed as a range where the steering angle slope change rate has a positive value in a direction of the steering angle slope change rate. That is, at the steering angle slope change rate having a negative value, the steering angle coefficient is set to 1 or more (table A) because the steering angle of the expected value is large, and at the steering angle slope change rate having a positive value, the steering angle coefficient is set to 1 or less (table B) because the steering angle of the expected value is small. In other words, the prediction unit 111 of this example includes, as tables including the steering angle coefficient defined as the ratio with respect to the expected value, the table A in the range where the steering angle slope change rate has a negative value and the table B in the range where the steering angle slope change rate has a positive value, and the steering angle coefficient (1 or more) set in the table A is equal to or more than the steering angle coefficient (1 or less) set in the table B. Note that the steering angle coefficients set in the tables A and B can be determined in advance from experiments, actual traveling tests, and the like. As a result, the steering angle of the expected value can be expressed, and the predicted travel path can be estimated in advance. As described above, in the present embodiment, the future steering angle is associated with the steering angle change rate based on reference travel data, and the steering angle is predicted.

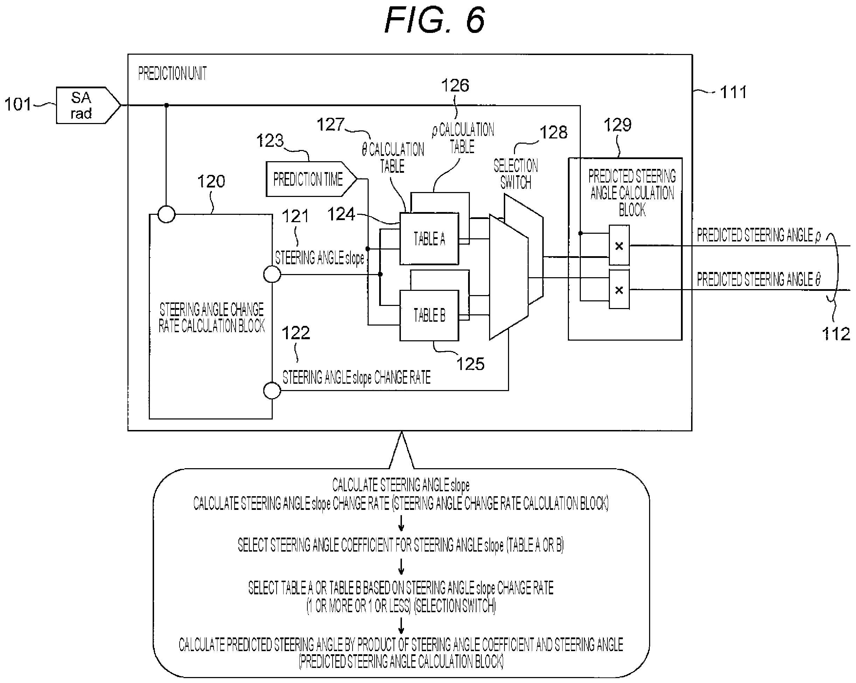

Next, a block diagram of the prediction unit 111 will be described. FIG. 6 is a diagram illustrating a block configuration example of the prediction unit 111 of the prediction processing unit 116 according to the first embodiment of the present invention.

The prediction unit 111 includes a steering angle change rate calculation block 120 that outputs a steering angle slope 121 and a steering angle slope change rate 122 with the steering angle 101 of the steering as input information, includes a table A 124 and a table B 125 (a curvature radius ρ calculation table 126 and a turning angle θ calculation table 127, respectively) of steering angle coefficients with the steering angle slope 121 and a prediction time 123 as parameters, and is configured so that a selection switch 128 selects whether the steering angle coefficient corresponding to the steering angle slope 121 and the prediction time 123 obtained by the steering angle change rate calculation block 120 is the table A 124 or the table B 125 based on the steering angle slope change rate 122. In addition, the prediction unit 111 includes a predicted steering angle calculation block 129 that integrates the steering angle coefficient in the table selected by the selection switch 128 with the steering angle 101 and outputs the predicted steering angle 112. Although not described in detail, in the steering angle change rate calculation block 120, the temporal change rate is calculated from the information regarding the steering angle 101, the steering angle slope change rate is obtained from the latest averaged steering angle slope and the next latest averaged steering angle slope, and the steering angle slope and the steering angle slope change rate are output.

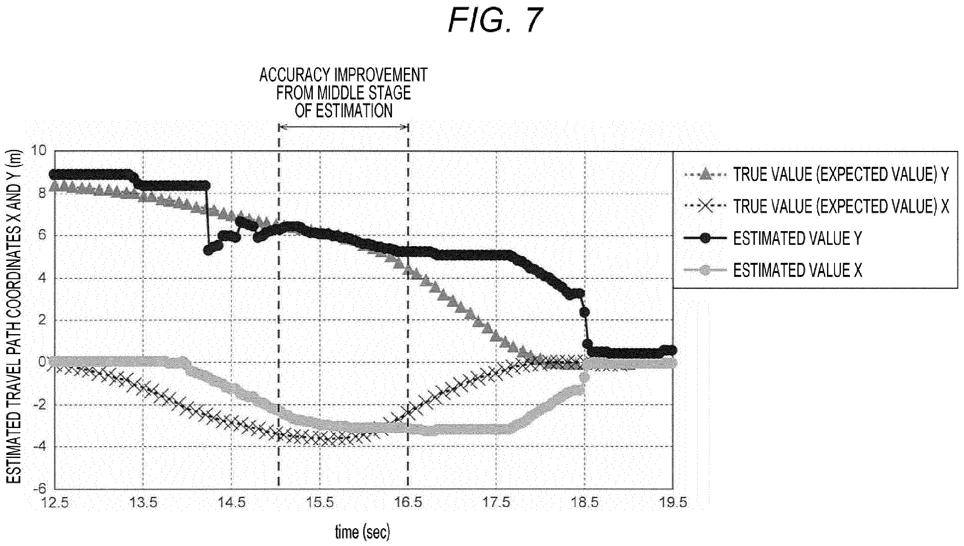

FIG. 7 is a diagram illustrating a travel path estimation result (specifically, a result of calculation of the vehicle property by the vehicle property calculation unit 113 based on the above-described output of the prediction unit 111 using a model calculation formula and calculation of the XY coordinates, which indicate the estimated position of the travel path of the host vehicle, by the XY coordinate calculation unit 115) according to the first embodiment of the present invention. FIG. 7 illustrates the travel path estimation result under the condition that a vehicle speed is 15 km/h, a radius of the intersection is 9.6 m, and a right turn is made. The horizontal axis represents an elapsed time during traveling of the host vehicle at the intersection, and the vertical axis represents estimated travel path coordinates X and Y after, for example, two seconds at each point.

As illustrated in FIG. 7, it can be confirmed that there is a delay in a time direction at the initial stage of estimation (that is, in the initial stage of traveling of the host vehicle at the intersection), but the calculation error satisfies a target calculation accuracy of ±1 m or less at and after the middle stage of estimation. That is, it can be confirmed that a prediction processing operation performed by the prediction unit 111 described above reflects the increasing or returning of the steering angle of the steering accompanying the traveling of the host vehicle.

Note that the travel path estimation condition (the vehicle speed is 15 km/h, the radius of the intersection is 9.6 m, and the right turn is made) is not limited to the above.

As described above, the travel path estimating device 100 of the first embodiment includes the prediction processing unit 116 including the prediction unit 111 that predicts the future steering angle amount based on the steering angle change rate, the vehicle property calculation unit 113 that calculates the vehicle property (by using the model calculation formula) based on the future steering angle information (amount) estimated by the prediction unit 111, and the XY coordinate calculation unit 115 that converts the vehicle property into the XY coordinates of the travel path of the host vehicle. According to the first embodiment, the future steering angle amount is predicted based on the steering angle change rate, and the travel path is estimated by the prediction processing operation of calculating the vehicle property based on the future steering angle information (amount), such that the estimation accuracy at and after the middle stage of estimation can be improved. Further, since the number of components is small, a scale of a circuit can be kept small, such that implementation in the microcomputer can be easily made. As a result, it is possible to accurately estimate the travel path of the host vehicle, and as described above, it is possible to reliably avoid a collision with a pedestrian or the like at an intersection, for example.

### [Second embodiment]

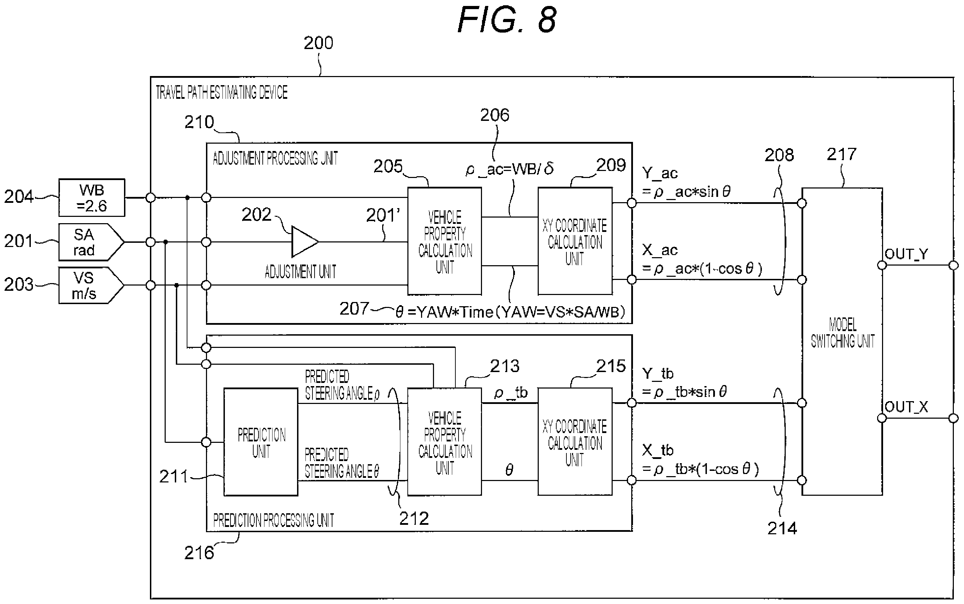

FIG. 8 is a diagram illustrating an example of a configuration of a travel path estimating device 200 according to a second embodiment of the present invention.

In the present embodiment, in addition to predicting (estimating) the future steering angle amount based on the steering angle change rate, adjustment of the steering angle of the steering makes a change in estimated travel path coordinates with respect to time larger than that before the adjustment, thereby reducing the time delay at the start of the right/left turning operation and the calculation error in the second half of the operation.

As illustrated in FIG. 8, in the travel path estimating device 200 of the second embodiment, similarly to the first embodiment described above, a steering angle (SA) 201 of the steering is input from the steering sensor 5, a vehicle speed (VS) 203 is input from the vehicle speed sensor 4, information regarding a wheelbase (WB) 204 stored in advance in a storage device such as a memory, and the like are input. The travel path estimating device 200 of the second embodiment includes: an adjustment processing unit 210 including an adjustment unit 202 that prompts an increase in speed of a coordinate curve by adjustment of the steering angle 201 of the steering, a vehicle property calculation unit 205 that calculates a vehicle property based on information regarding an adjusted steering angle (tire angle δ) 201', which is an output of the adjustment unit 202, the vehicle speed 203, and the wheelbase 204, and an XY coordinate calculation unit 209 that calculates XY coordinates 208, which indicates an estimated position of a future travel path of the host vehicle, based on a turning radius ρ_ac 206 and a turning angle θ 207 which are outputs of the vehicle property calculation unit 205; a prediction processing unit 216 including a prediction unit 211 that predicts a future steering angle amount based on a steering angle change rate, a vehicle property calculation unit 213 that calculates a vehicle property based on information such as a predicted steering angle 212 which is an output of the prediction unit 211, and an XY coordinate calculation unit 215 that calculates XY coordinates 214, which indicates an estimated position of a future travel path of the host vehicle, based on the vehicle property which is an output of the vehicle property calculation unit 213; and a model switching unit 217 that performs switching between the adjustment processing unit 210 and the prediction processing unit 216 (specifically, switching between outputs of the adjustment processing unit 210 and the prediction processing unit 216).

Operation processing performed by the prediction processing unit 216 in the second embodiment is the same as the operation processing performed by the prediction processing unit 116 (FIG. 3) in the first embodiment described above.

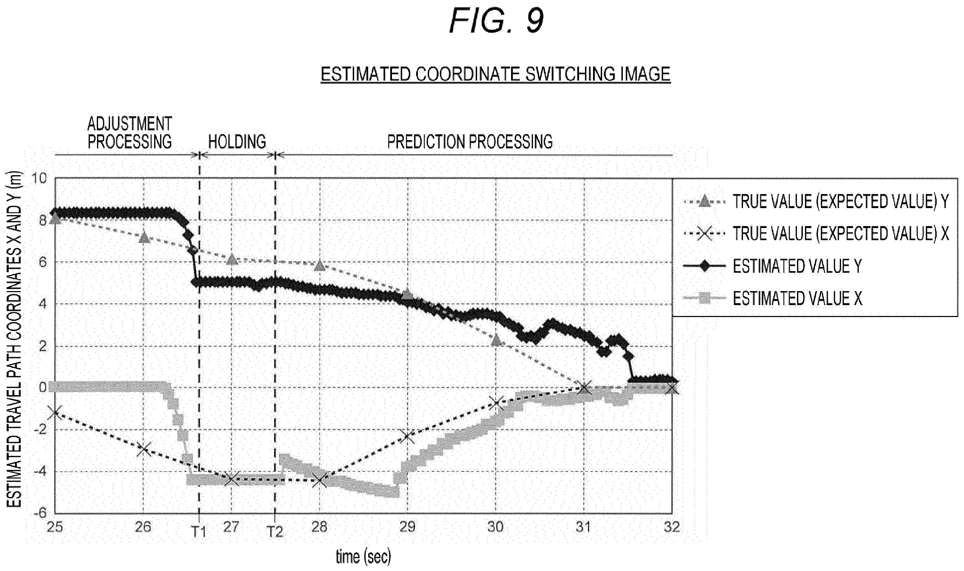

FIG. 9 illustrates a switching image of travel path estimation processing performed by the travel path estimating device 200 according to the second embodiment of the present invention, specifically, an image of switching between the adjustment processing (adjustment processing unit 210) and the prediction processing (prediction processing unit 216) by the model switching unit 217. The horizontal axis represents an elapsed time during traveling of the host vehicle at the intersection, and the vertical axis represents estimated travel path coordinates X and Y after, for example, two seconds at each point.

As illustrated in FIG. 9, the second embodiment is a method of switching from the adjustment processing (adjustment processing unit 210) to the prediction processing (prediction processing unit 216) during traveling at the intersection. Specifically, the travel path estimating device 200 temporarily holds an estimation result of the adjustment processing unit 210 at a point at which the estimation result of the adjustment processing unit 210 (is considered as crossing) crosses an actual travel trajectory (expected value) (specifically, holds the steering angle), and performs switching from held data to an estimation result of the prediction processing unit 216 at a point after further traveling through the intersection. A switching timing is determined according to the steering angle of the steering, and switching timings T1 and T2 are determined in the model switching unit 217. The switching timing T1 is a timing at which switching from the adjustment processing operation performed by the adjustment unit 202 of the adjustment processing unit 210 to the holding of the steering angle is performed, and a table of switching timings corresponding to the vehicle speeds is prepared to set a switching timing for quickly approaching the expected value and minimizing an error from the expected value. The switching timing T2 is a timing at which switching from the holding of the steering angle to the prediction processing operation performed by the prediction unit 211 of the prediction processing unit 216 is performed, and a fixed value is set regardless of the vehicle speed since the influence of the vehicle speed is small. For example, the steering angle of the steering at the switching timing T1 is set to 20 to 200 degrees, and the steering angle of the steering at the switching timing T2 is set to 250 to 400 degrees. By setting the switching timing based on the steering angle of the steering in this manner, it is possible to smoothly perform switching from the adjustment processing unit 210 to the prediction processing unit 216.

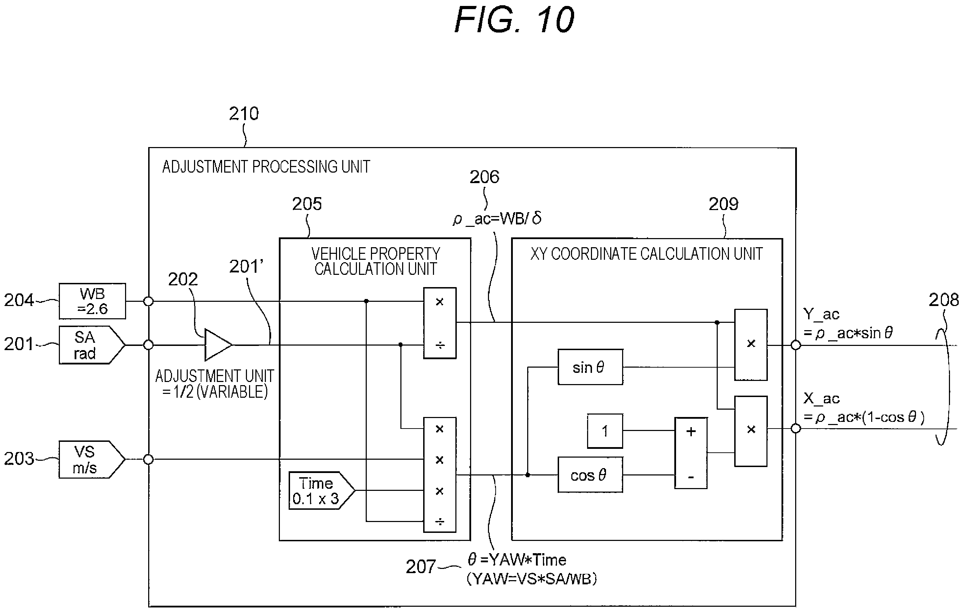

Next, an adjustment operation of the adjustment processing unit 210 will be described. FIG. 10 is a calculation block diagram of the adjustment processing unit 210 according to the second embodiment of the present invention. A difference from the conventional model calculation block (FIG. 21) is that the steering gear ratio 152 having a fixed value is changed by the adjustment unit 202. That is, the adjustment unit 202 of this example can change the gear ratio unlike the conventional gear ratio having a fixed value of 1/20. For example, as the adjustment unit 202 sets the gear ratio to 1/2, which is 10 times the conventional gear ratio, it is possible to express the tire angle δ which is 10 times in a pseudo manner and to increase the speed of the change in estimated coordinates (that is, adjustment of the steering angle of the steering can make the change in estimated coordinates of the travel path with respect to time larger than that before the adjustment).

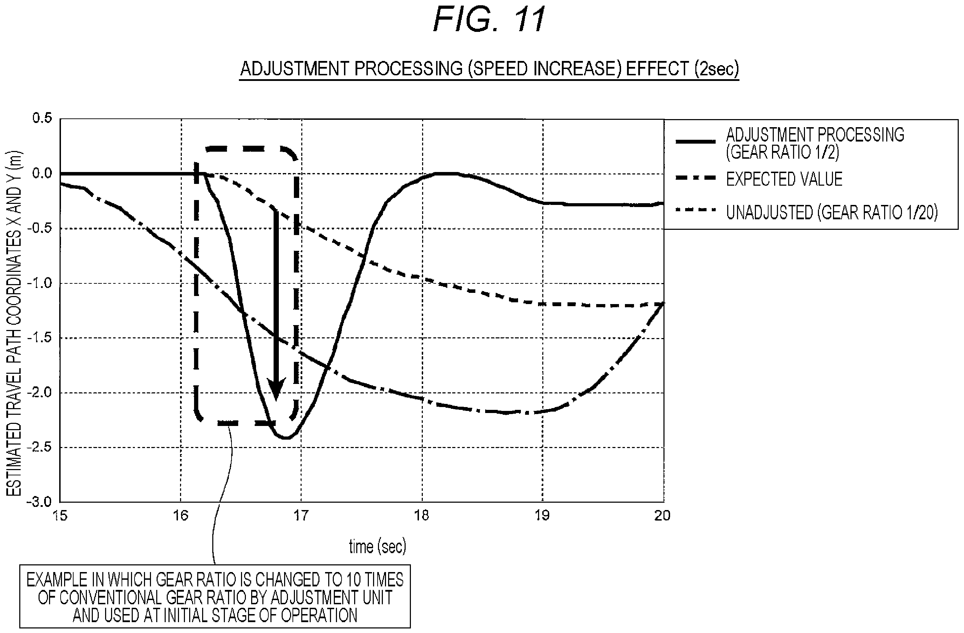

FIG. 11 illustrates an effect of the adjustment processing performed by the adjustment processing unit 210 described above. The horizontal axis represents an elapsed time during traveling of the host vehicle at an intersection, and the vertical axis represents estimated travel path coordinates X and Y after two seconds at each point. A line with alternating long and short dashes in FIG. 11 indicates the expected value (actual travel trajectory), a broken line indicates an estimation result for the conventional gear ratio of 1/20, and a solid line indicates an estimation result for the gear ratio of 1/2 set by the adjustment unit 202 of this example.

As illustrated in FIG. 11, the conventional estimation result is delayed in time and largely deviates from the expected value. On the other hand, in the result estimated by the adjustment unit 202 of the present example, although the time is delayed, it is possible to reach the expected value as soon as possible. As described above, the gear ratio is changed by the adjustment unit 202, such that the gear ratio can be set to, for example, 1/2, which is 10 times the conventional gear ratio, in the calculation at the initial stage of estimation to increase the speed, and the gear ratio can be set to, for example, 1/20 similarly to the conventional gear ratio, in the calculation at the middle stage of estimation.

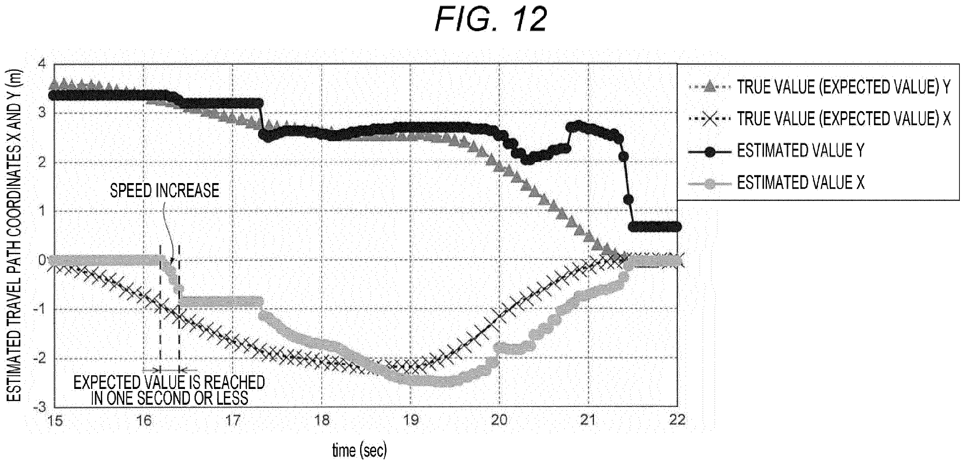

Finally, effects of the second embodiment will be described. FIG. 12 is a diagram illustrating a speed increasing effect of the adjustment processing unit 210 of the second embodiment. FIG. 12 illustrates the travel path estimation result under the condition that a vehicle speed is 7 km/h, a radius of the intersection is 4.8 m, and a right turn is made. The horizontal axis represents an elapsed time during traveling of the host vehicle at an intersection, and the vertical axis represents estimated travel path coordinates X and Y after two seconds at each point.

As described based on FIG. 22, in the conventional model, the overall result is a result delayed by about two seconds in the time axis direction, and it takes about four seconds to reach the expected value. On the other hand, it can be seen that, although the result is delayed in the time axis direction at the start of the operation due to the increase in speed by the adjustment processing performed by the adjustment processing unit 210 of the second embodiment, the coordinates are steeply changed to approach the expected value thereafter as in FIG. 11, and can almost reach the expected value in one second or less.

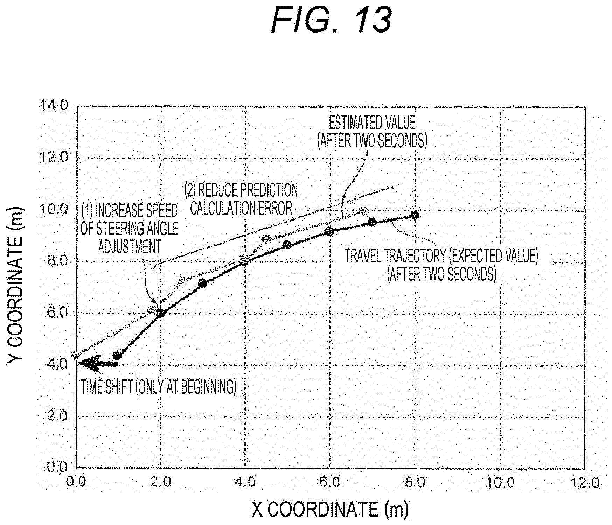

FIG. 13 is a diagram illustrating an accuracy improvement effect of the prediction processing unit 216 according to the second embodiment. In FIG. 13, a difference between an estimation result under the same travel condition as that in FIG. 12 and the actual travel trajectory is plotted.

Referring to FIG. 13, it can be seen that although there is a time delay at the start of the operation with respect to the conventional error of about 2 m illustrated in FIG. 25, the travel trajectory (expected value) can be quickly approached due to the increase in speed by the adjustment processing performed by the adjustment processing unit 210, and in the second half of the operation, the calculation error in the second half is 1 m or less by the calculation using the predicted steering angle 212 of the prediction processing unit 216, and the accuracy is improved.

Note that the travel path estimation condition (the vehicle speed is 7 km/h, the radius of the intersection is 4.8 m, and the right turn is made) is not limited to the above.

As described above, the travel path estimating device 200 of the second embodiment includes: the adjustment processing unit 210 including the adjustment unit 202 that adjusts the steering angle of the steering to make the change in estimated coordinates of the travel path with respect to time larger than that before the adjustment, the vehicle property calculation unit 205 that calculates the vehicle property based on the information regarding the adjusted steering angle, the vehicle speed, and the wheelbase, and the XY coordinate calculation unit 209 that calculates the XY coordinates of the travel path of the host vehicle based on the vehicle property; the prediction processing unit 216 including the prediction unit 211 that predicts the future steering angle amount based on the steering angle change rate, the vehicle property calculation unit 213 that calculates the vehicle property (by using the model calculation formula) based on the future steering angle information (amount) estimated by the prediction unit 211, and the XY coordinate calculation unit 215 that converts the vehicle property into the XY coordinates of the travel path of the host vehicle; and the model switching unit 217 that performs switching between the adjustment processing operation and the prediction processing operation.

The travel path estimation processing operation performed by the travel path estimating device 200 uses the adjustment processing operation at the start of the estimation, switching to the prediction processing operation is performed in the second half of the estimation, and the travel path estimation processing is performed. In other words, the switching between the operation of the prediction unit 211 and the operation of the adjustment unit 202 by the model switching unit 217 includes starting the estimation of the travel path of the host vehicle using the adjustment processing unit 210 and the subsequent switching to the estimation of the travel path of the host vehicle using the prediction processing unit 216. In addition, the switching between the operation of the prediction unit 211 and the operation of the adjustment unit 202 is performed in the order of the adjustment processing operation performed by the adjustment unit 202, the holding of the steering angle, and the prediction processing operation performed by the prediction unit 211. For example, switching from the adjustment processing operation to the holding of the steering angle, which enables quickly reaching the expected value and reducing an error from the expected value at a timing corresponding to the vehicle speed, is performed at a switching timing at which the steering angle of the steering is 20 to 200 degrees. Switching from the holding of the steering angle to the prediction processing operation, which enables smooth switching from the holding to the prediction processing unit regardless of the vehicle speed, is performed at a switching timing at which the steering angle of the steering is 250 to 400 degrees.

According to the second embodiment, Adjustment of the steering angle of the steering makes the change in estimated coordinates of the travel path with respect to time larger than that before the adjustment (the adjustment unit 202), the adjustment processing unit 210 that calculates the vehicle property based on the information regarding the adjusted steering angle, the vehicle speed, and the wheelbase is used at the start of the estimation of the travel path of the host vehicle, and the prediction processing unit 216 that predicts the future steering angle amount based on the steering angle change rate (the prediction unit 211) and calculates the vehicle property based on the steering angle information (amount) is used in the second half of estimation, thus, it is possible to reduce the time delay at the start of the estimation, to reduce the calculation error in the second half of the estimation, and to improve the accuracy in travel path estimation calculation.

As described above, according to the configuration of the adjustment processing unit and the configuration of the prediction processing unit in FIG. 8 and the processor switching image in FIG. 9, the speed is increased by the adjustment processing performed by the adjustment processing unit 210, and the calculation accuracy is improved by the prediction processing performed by the prediction processing unit 216, and for example, as the adjustment unit 202 sets the gear ratio to 1/2 that is 10 times the conventional gear ratio, there is an effect of expressing the tire angle δ which is 10 times in a pseudo manner and increasing (varying) the speed of the change in estimated coordinates to make the estimated coordinates almost reach the expected value in one second or less. In addition, as described in the first embodiment, the prediction unit 211 sets the steering angle coefficient to 1 or more for a side (range) where the steering angle slope change rate has a negative value, and sets the steering angle coefficient to 1 or less for a side (range) where the steering angle slope change rate has a positive value, such that it is possible to express the steering angle of the expected value, and there is an effect of improving the accuracy in travel path estimation calculation. As a result, it is possible to accurately estimate the travel path of the host vehicle, and as described above, it is possible to reliably avoid a collision with a pedestrian or the like at an intersection, for example.

Note that the model switching unit 217 of the travel path estimating device 200 according to the second embodiment of the present invention has a function of performing switching between the adjustment processing operation (adjustment processing unit 210) and the prediction processing operation (prediction processing unit 216). Therefore, for example, the model switching unit can also function as a determination unit that determines necessity of prediction performed by the prediction unit 211 of the prediction processing unit 216 and performs switching between the operation of the prediction unit 211 of the prediction processing unit 216 and the operation of the adjustment unit 202 of the adjustment processing unit 210.

### [Third embodiment]

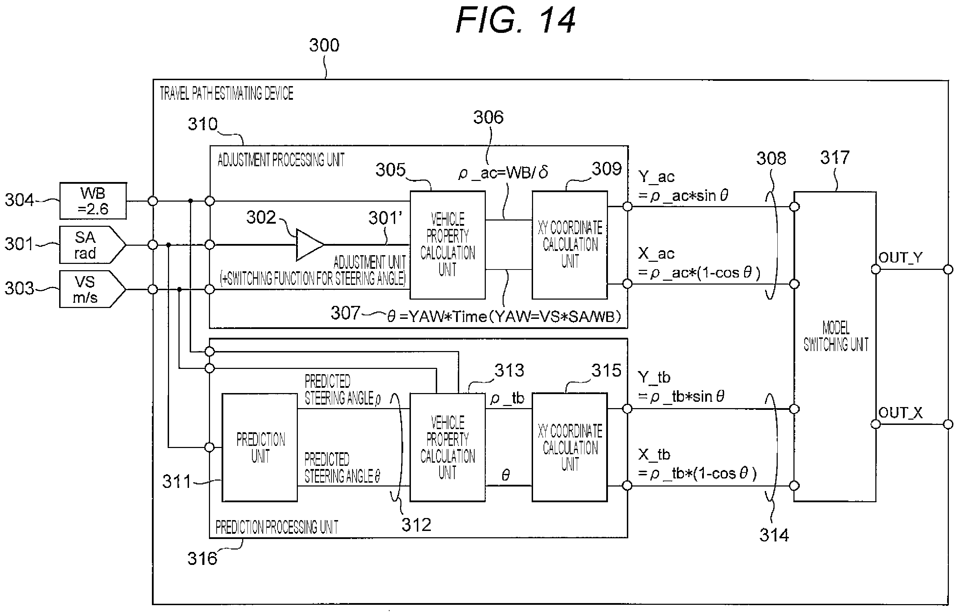

FIG. 14 is a diagram illustrating an example of a configuration of a travel path estimating device 300 according to a third embodiment of the present invention. A basic configuration of the third embodiment is the same as the configuration of the second embodiment described above. A difference is that a function is added to an adjustment unit 302 that can variably set the gear ratio. Although not illustrated in detail, the adjustment unit 302 in the third embodiment is designed to switch the gear ratio setting according to the steering angle. In other words, the adjustment unit 302 according to the third embodiment switches the gear ratio setting with a steering angle (SA) 301 of the steering as input information.

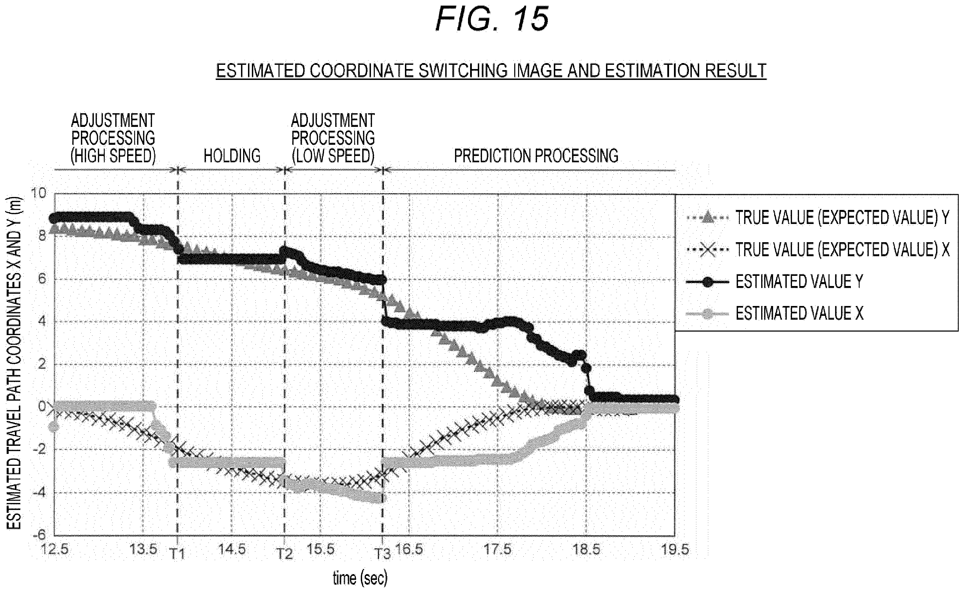

FIG. 15 is a diagram illustrating a switching image of travel path estimation processing and a travel path estimation result according to the third embodiment of the present invention. FIG. 15 illustrates the travel path estimation result under the condition that a vehicle speed is 15 km/h, a radius of the intersection is 9.6 m, and a right turn is made. The horizontal axis represents an elapsed time during traveling of the host vehicle at the intersection, and the vertical axis represents estimated travel path coordinates X and Y after, for example, two seconds at each point.

As illustrated in FIG. 15, the third embodiment is a method of switching from an adjustment processing operation (adjustment processing unit 310) to a prediction processing operation (prediction processing unit 316) during traveling at the intersection. A difference from the second embodiment is a switching order. The processing switching of the third embodiment is performed in order of the adjustment processing operation (for example, the gear ratio of 1/2), the holding, the adjustment processing operation (for example, the gear ratio of 1/20), and the prediction processing operation. Specifically, an estimation result of the adjustment processing unit 310 is temporarily held at a point (a switching timing T1 at which the steering angle is around 90 degrees or less) at which the estimation result of the adjustment processing unit 310 (is considered as crossing) crosses an actual travel trajectory (expected value) (specifically, the steering angle is held), and switching from the held data to the estimation result of the adjustment processing unit 310 is performed again at a point (a switching timing T2 at which the steering angle is around 100 to 180 degrees) after further traveling through the intersection. At a point after further traveling through the intersection (a switching timing T3 at which the steering angle is around 350 degrees), switching from the estimation result of the adjustment processing unit 310 to the estimation result of the prediction processing unit 316 is performed. By setting the switching timing based on the steering angle of the steering in this manner, it is possible to smoothly perform switching from the adjustment processing operation to the prediction processing operation.

In the adjustment unit 302, the gear ratio with respect to the steering angle is prepared as a table. Until the switching timing T1 (the start of estimation of the travel path of the host vehicle at which the steering angle is 90 degrees or less), the gear ratio is set to 1/2 to 1/1 (for example, 1/2) in order to quickly make the gear ratio at the start of the estimation reach the expected value and to suppress an error with respect to a variation in vehicle speed or the like, and after the switching timing T2 (steering angle: 100 to 180 degrees or more), the gear ratio at or after the middle stage of the estimation is set to 1/25 to 1/10 (for example, 1/20) in order to cover a gear ratio of 1/13 of a normal vehicle and gear ratio of 1/20 of a truck or the like for simulating a normal operation.

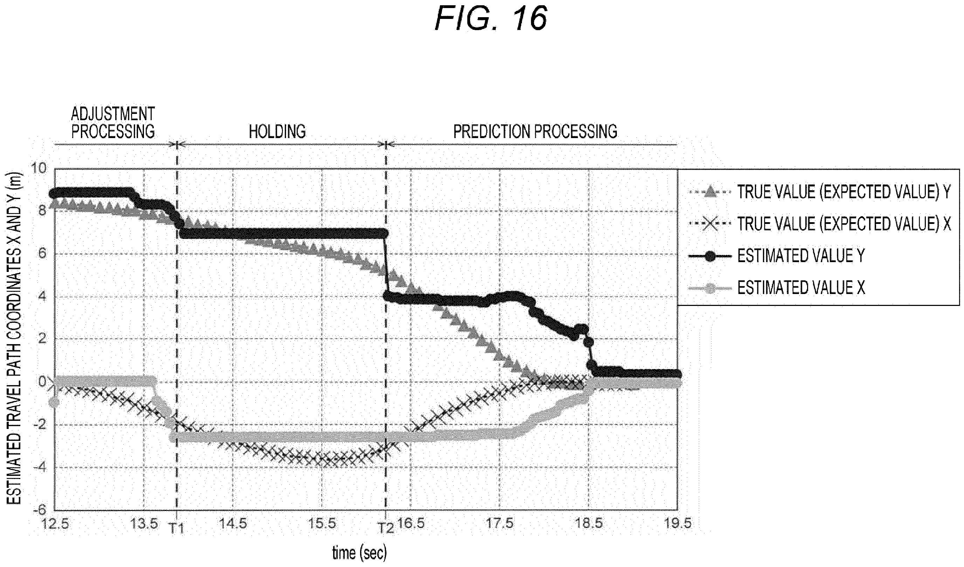

FIG. 16 is a diagram illustrating a travel path estimation result of the second embodiment (switching is performed in order of the adjustment processing operation → the holding → the prediction processing operation) under the same condition. It can be seen from the result of the second embodiment illustrated in FIG. 16 that a step is large at the point (switching timing T2) at which switching from the held data to the prediction processing unit is performed, and the error from the expected value is barely 1 m.

In the third embodiment, the calculation accuracy can be further improved as described above by following the procedure of switching to the adjustment processing unit 310 again before switching the switching procedure to the prediction processing unit 316 (that is, switching is performed in order of the adjustment processing operation → the holding → the adjustment processing operation → the prediction processing operation) unlike the second embodiment.

Note that the travel path estimation condition (the vehicle speed is 15 km/h, the radius of the intersection is 9.6 m, and the right turn is made) is not limited to the above.

As described above, while the travel path estimating device 300 of the third embodiment has the same configuration as the travel path estimating device 200 of the second embodiment described above, the adjustment unit 302 switches the gear ratio setting according to the steering angle.

In addition, switching between an operation of a prediction unit 311 and the operation of the adjustment unit 302 is performed by a model switching unit 317 in order of the adjustment processing operation performed by the adjustment unit 302, the holding of the steering angle, the adjustment processing operation performed by the adjustment unit 302, and the prediction processing operation performed by the prediction unit 311, and in the adjustment processing operation performed by the adjustment unit 302, the steering gear ratio at the start of the estimation of the travel path of the host vehicle is set to a gear ratio of 1/2 to 1/1, which enables quickly reaching the expected value and suppressing errors with respect to variations in vehicle speed or the like, and the steering gear ratio at and after the middle stage of the estimation thereafter is set to a gear ratio of 1/25 to 1/10, which covers a gear ratio of 1/13 of a normal vehicle and a gear ratio of 1/20 of a truck or the like for simulating a normal operation.

According to the third embodiment, the travel path estimating device 300 includes: the adjustment processing unit 310 that adjusts the steering angle of the steering to make the change in estimated coordinates of the travel path with respect to time larger than that before the adjustment (the adjustment unit 302), and calculates the vehicle property based on the information regarding the adjusted steering angle, the vehicle speed, and the wheelbase; the prediction processing unit 316 that predicts the future steering angle amount based on the steering angle change rate (the prediction unit 311), and calculates the vehicle property based on the steering angle information (amount); and the model switching unit 317 that performs switching between (the adjustment processing operation performed by) the adjustment processing unit 310 and (the prediction processing operation performed by) the prediction processing unit 316, in which the switching between the adjustment processing unit 310 and the prediction processing unit 316 is performed by the model switching unit 317 in order of the adjustment processing operation (for example, a gear ratio of 1/2 to 1/1, in particular, 1/2), the holding, the adjustment processing operation (for example, a gear ratio of 1/25 to 1/10, in particular, 1/20), and the prediction processing operation, such that the calculation error from the middle stage of the estimation to the second half of the estimation can be further reduced, and the accuracy in travel path estimation calculation can be improved.

As described above, according to the configuration of the adjustment processing unit and the configuration of the prediction processing unit in FIG. 14, the switching between the adjustment processing unit 310 and the prediction processing unit 316 by the model switching unit 317 is performed in order of the adjustment processing operation (for example, a gear ratio of 1/2 to 1/1, in particular, 1/2), the holding, the adjustment processing operation (for example, a gear ratio of 1/25 to 1/10, in particular, 1/20), and the prediction processing operation. In addition, for example, as the adjustment unit sets the gear ratio to 1/2 that is 10 times the conventional gear ratio at the initial stage, there is an effect of expressing a tire angle, which is 10 times, in a pseudo manner and increasing the temporal change of the estimated coordinates to make the estimated coordinates quickly reach the expected value. In addition, as the adjustment unit sets the gear ratio to 1/20 that is the conventional gear ratio at the stage subsequent to the holding, it is possible to reduce the step due to the switching at the middle stage, and there is an effect of further improving the accuracy in travel path estimation calculation. As a result, it is possible to accurately estimate the travel path of the host vehicle, and as described above, it is possible to reliably avoid a collision with a pedestrian or the like at an intersection, for example.

### [Fourth embodiment]

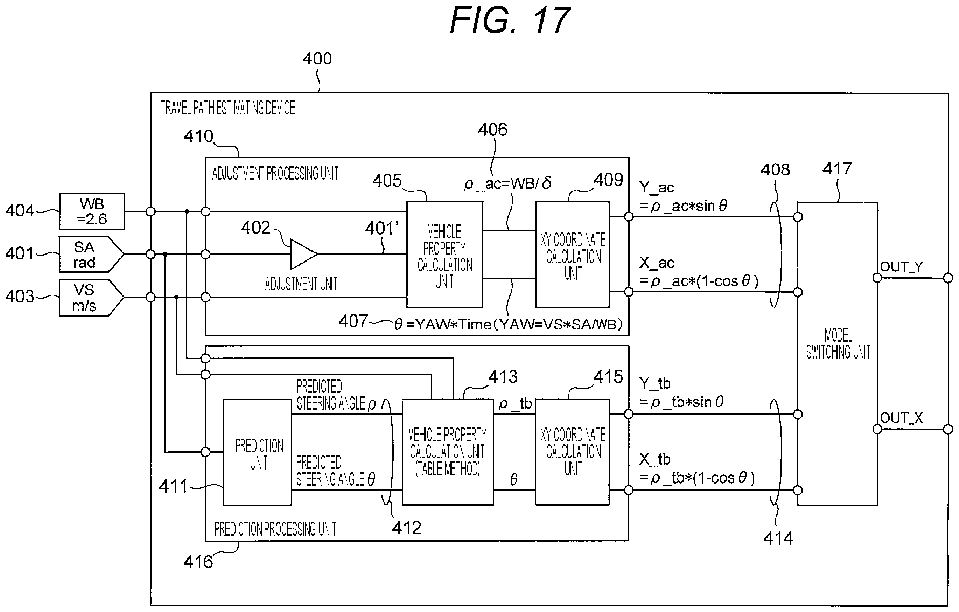

FIG. 17 is a diagram illustrating an example of a configuration of a travel path estimating device 400 according to a fourth embodiment of the present invention. A basic configuration of the fourth embodiment is the same as the configuration of the second embodiment described above. A difference is that a vehicle property calculation unit 413 in a prediction processing unit 4 16 is changed to use a table method in which an actual vehicle property is set, rather than the model calculation.

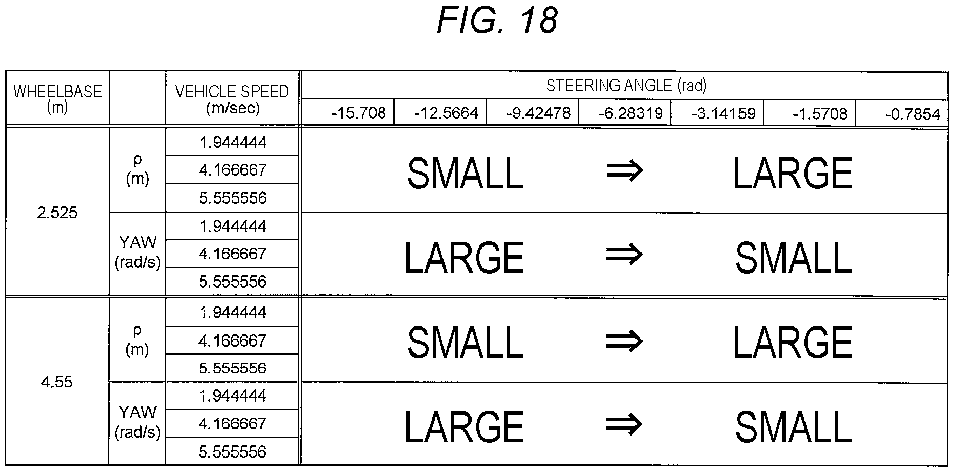

FIG. 18 illustrates an outline of a table according to the fourth embodiment of the present invention. This table is created from actual measurement data of an actual vehicle traveling test, for example. The condition of actual vehicle traveling is that, for example, the vehicle speed is 5, 15, and 20 km/h, the steering angle is 45, 90, 180, 360, 540, and 720 degrees, and a turning radius ρ and a turning angle θ are obtained from trajectory data of turning at a constant steering angle. The table includes the turning radius ρ and a turning angular velocity (yaw rate) YAW (turning angle θ/turning data time difference) with the steering angle SA (rad) and the vehicle speed VS (m/s) as parameters. Although FIG. 18 illustrates on the negative steering angle SA, but the positive steering angle SA is also prepared in bilateral symmetry. In addition, association with a vehicle type is also considered by using the wheelbase as a parameter. In FIG. 18, only two wheelbase points (2.525 m and 4.55 m) are illustrated, but three points are prepared, and linear interpolation is performed between two points for each vehicle type for use in coordinate calculation.

In general, the accuracy in calculating the turning radius ρ and the turning angle θ by using the model calculation formula tends to deteriorate due to an influence of sideslip as the vehicle speed is higher. On the other hand, in a method of performing calculation based on the actual vehicle turning trajectory of the fourth embodiment, since the sideslip also affects the travel result, it is considered that accuracy deterioration is not severe. Although the effect is not particularly illustrated, it goes without saying that the calculation accuracy can be secured even in the travel path estimation in a case where the vehicle speed is high.

As described above, while the travel path estimating device 400 of the fourth embodiment has the same configuration as the travel path estimating device 200 of the second embodiment described above, the vehicle property calculation unit 413 is configured to create the table including the turning radius and the turning angular velocity which are the actual vehicle properties (rather than using the model calculation formula) and use the table for calculation of the vehicle property.

According to the fourth embodiment, as the vehicle property calculation unit 413 of the travel path estimating device 400 uses the table method in which the turning radius and the turning angle (and the turning angular velocity) are obtained from the actual vehicle turning trajectory to estimate the travel path, there is an effect that the calculation accuracy can be secured even under the condition that the vehicle speed is high. As a result, it is possible to accurately estimate the travel path of the host vehicle, and as described above, it is possible to reliably avoid a collision with a pedestrian or the like at an intersection, for example.

Note that the present invention is not limited to the embodiments described above, but includes various modified examples. For example, the above-described embodiments have been described in detail in order to explain the present invention in an easy-to-understand manner, and the present invention is not necessarily limited to those having all the configurations described. Further, a part of a configuration of an embodiment can be replaced with a configuration of another embodiment, and a configuration of an embodiment can be added with a configuration of another embodiment. In addition, a part of the configuration of each embodiment can be added with a configuration of another embodiment, can be deleted, and can be replaced with a configuration of another configuration.

In addition, some or all of the above-described configurations, functions, processing units, processing means, and the like may be implemented by hardware, for example, by designing with an integrated circuit. In addition, each of the above-described configurations, functions, and the like may be implemented by software in a manner in which a processor interprets and executes a program for implementing each function. Information such as a program, a table, and a file for implementing each function can be stored in a storage device such as a memory, a hard disk, or a solid state drive (SSD), or a recording medium such as an IC card, an SD card, or a DVD.

In addition, the control lines and information lines indicate those that are considered necessary for explanation, and do not necessarily indicate all the control lines and information lines in the product. In practice, it can be considered that almost all configurations are interconnected. Reference Signs List

1 vehicle
2 front monitoring camera
3 front-side radar
4 vehicle speed sensor
5 steering sensor
7 signal processing device
8 alarm processing device
9 ECU (microcomputer)
100 travel path estimating device (first embodiment)
101, 201, 301, 401 steering angle (SA) of steering
103, 203, 303, 403 vehicle speed (VS)
104, 204, 304, 404 wheelbase (WB)
106 turning radius (ρ_tb) of vehicle
107 turning angle (θ) of vehicle
111, 211, 311, 411 prediction unit
112, 212, 312, 412 predicted steering angle
113, 213, 313, 413 vehicle property calculation unit (vehicle property calculation unit for prediction processing)
114, 214, 414, 414 estimated position (XY coordinates) of travel path of host vehicle
115, 215, 315, 415 XY coordinate calculation unit (XY coordinate calculation unit for prediction processing)
116, 216, 316, 416 prediction processing unit
120 steering angle change rate calculation block
121 steering angle change rate (steering angle slope)
122 steering angle slope change rate
123 prediction time
124 table A
125 table B
126 ρ calculation table
127 θ calculation table
128 selection switch
129 predicted steering angle calculation block
200 travel path estimating device (second embodiment)
201', 301', 401' steering angle (tire angle) after adjustment
202, 302, 402 adjustment unit
205, 305, 405 vehicle property calculation unit (vehicle property calculation unit for adjustment processing)
208, 308, 408 estimated position (XY coordinates) of travel path of host vehicle
209, 309, 409 XY coordinate calculation unit (XY coordinate calculation unit for adjustment processing)
210, 310, 410 adjustment processing unit
217, 317, 417 model switching unit (determination unit) 300 travel path estimating device (third embodiment)
400 travel path estimating device (fourth embodiment)

## Claims

1. A travel path estimating device that estimates a travel path of a host vehicle based on a steering angle amount of steering, the travel path estimating device comprising
a prediction unit that predicts a future steering angle amount based on a steering angle change rate that is a temporal change of the steering angle amount.

2. The travel path estimating device according to claim 1, further comprising a determination unit that determines necessity of the prediction performed by the prediction unit.

3. The travel path estimating device according to claim 2, further comprising an adjustment unit that adjusts a steering angle of the steering to make a change in estimated travel path coordinates with respect to time larger than that before the adjustment,
wherein the determination of the necessity of the prediction performed by the determination unit includes switching between an operation of the prediction unit and an operation of the adjustment unit.

4. The travel path estimating device according to claim 1, wherein the travel path estimating device comprises a prediction processing unit including:
the prediction unit;
a vehicle property calculation unit for prediction processing that calculates a vehicle property based on the future steering angle amount estimated by the prediction unit; and
a XY coordinate calculation unit for prediction processing that calculates XY coordinates of the travel path of the host vehicle based on the vehicle property calculated by the vehicle property calculation unit for prediction processing.

5. The travel path estimating device according to claim 3, wherein the travel path estimating device comprises an adjustment processing unit including:
the adjustment unit;
a vehicle property calculation unit for adjustment processing that calculates a vehicle property based on information regarding the steering angle of the steering adjusted by the adjustment unit, a vehicle speed, and a wheelbase; and
an XY coordinate calculation unit for adjustment processing that calculates XY coordinates of the travel path of the host vehicle based on the vehicle property calculated by the vehicle property calculation unit for adjustment processing.

6. The travel path estimating device according to claim 3, wherein the travel path estimating device comprises:
a prediction processing unit including the prediction unit, a vehicle property calculation unit for prediction processing that calculates a vehicle property based on the future steering angle amount estimated by the prediction unit, and an XY coordinate calculation unit for prediction processing that calculates XY coordinates of the travel path of the host vehicle based on the vehicle property calculated by the vehicle property calculation unit for prediction processing; and
an adjustment processing unit including the adjustment unit, a vehicle property calculation unit for adjustment processing that calculates a vehicle property based on information regarding the steering angle of the steering adjusted by the adjustment unit, a vehicle speed, and a wheelbase, and an XY coordinate calculation unit for adjustment processing that calculates XY coordinates of the travel path of the host vehicle based on the vehicle property calculated by the vehicle property calculation unit for adjustment processing, and
the switching between the operation of the prediction unit and the operation of the adjustment unit includes starting estimation of the travel path of the host vehicle using the adjustment processing unit and a subsequent switching to estimation of the travel path of the host vehicle using the prediction processing unit.

7. The travel path estimating device according to claim 4, wherein the vehicle property calculation unit for prediction processing in the prediction processing unit calculates the vehicle property by using a model calculation formula.

8. The travel path estimating device according to claim 4, wherein the vehicle property calculation unit for prediction processing in the prediction processing unit creates a table of a turning radius and a turning angular velocity, which are actual vehicle properties, and uses the table for calculation of the vehicle property.

9. The travel path estimating device according to claim 5, wherein the adjustment unit in the adjustment processing unit varies a steering gear ratio to vary a change in estimated travel path coordinates with respect to time.

10. The travel path estimating device according to claim 4, wherein the prediction unit includes, as tables including a steering angle coefficient defined as a ratio with respect to an expected value, a table A in a range where a steering angle slope change rate, which is a temporal change of the steering angle change rate, has a negative value and a table B in a range where the steering angle slope change rate has a positive value, and
the steering angle coefficient set in the table A is equal to or more than the steering angle coefficient set in the table B.

11. The travel path estimating device according to claim 3, wherein the switching between the operation of the prediction unit and the operation of the adjustment unit is performed in order of an adjustment processing operation performed by the adjustment unit, holding of the steering angle, and a prediction processing operation performed by the prediction unit.

12. The travel path estimating device according to claim 3, wherein the switching between the operation of the prediction unit and the operation of the adjustment unit is performed in order of an adjustment processing operation performed by the adjustment unit, holding of the steering angle, an adjustment processing operation performed by the adjustment unit, and a prediction processing operation performed by the prediction unit.

13. The travel path estimating device according to claim 11, wherein the switching between the operation of the prediction unit and the operation of the adjustment unit is performed in such a manner that switching from the adjustment processing operation performed by the adjustment unit to the holding of the steering angle is performed at a switching timing at which the steering angle of the steering is 20 to 200 degrees, and switching from the holding of the steering angle to the prediction processing operation performed by the prediction unit is performed at a switching timing at which the steering angle of the steering is 250 to 400 degrees.

14. The travel path estimating device according to claim 12, wherein in the adjustment processing operation, a steering gear ratio at a start of estimation of the travel path of the host vehicle is set to 1/2 to 1/1, and a steering gear ratio at a subsequent stage is set to 1/25 to 1/10.

15. The travel path estimating device according to claim 1, wherein a prediction processing operation performed by the prediction unit reflects increasing or returning of the steering angle of the steering accompanying traveling of the host vehicle.
